# EUROPÄISCHE PATENTSCHRIFT

(11) **EP 1 275 083 B1**
(45) Veröffentlichungstag und Bekanntmachung des Hinweises auf die Patenterteilung: **18.08.2004**
(21) Anmeldenummer: 01929490.9
(22) Anmeldetag: 02.04.2001
(51) Int. Cl.: G06K 19/077, G09F 3/03, G09F 3/10

(54) **DATENAUSTAUSCHETIKETT UND VERFAHREN ZU DESSEN ANBRINGUNG**
DATA EXCHANGE LABEL AND A METHOD FOR APPLYING THE SAME
ETIQUETTE D'ECHANGE DE DONNEES ET PROCEDE POUR APPLIQUER CETTE DERNIERE

(30) Priorität: 06.04.2000 DE 10017142
(43) Veröffentlichungstag der Anmeldung: 15.01.2003
(73) Patentinhaber: Schreiner GmbH & Co. KG, 85764 Oberschleissheim (DE)
(72) Erfinder: SCHREINER, Helmut, 80995 München (DE)
(74) Vertreter: Kehl, Günther, Dipl.-Phys.
(86) Internationale Anmeldenummer: PCT/EP2001/003722
(87) Internationale Veröffentlichungsnummer: WO 2001/078002

(56) Entgegenhaltungen:
- US-A- 5 779 839
- US-A- 5 838 253
- PATENT ABSTRACTS OF JAPAN vol. 016, no. 474 (M-1319), 2. Oktober 1992 (1992-10-02) & JP 04 171146 A (KUBOTA CORP), 18. Juni 1992 (1992-06-18)
- PATENT ABSTRACTS OF JAPAN vol. 1997, no. 11, 28. November 1997 (1997-11-28) & JP 09 198481 A (TOSHIBA CHEM CORP), 31. Juli 1997 (1997-07-31)

## Beschreibung

Die Erfindung betrifft ein Datenaustauschetikett nach dem oberbegriff des Patentanspruches 1.

Derartige Etiketten sind bekannt und werden häufig auf Werkstücken angebracht, um einen automatischen Herstellungsprozess zu steuern, beispielsweise auf einer Fertigungsstraße, wobei zwischen den Bearbeitungswerkzeugen und dem Werkstück ein Datenaustausch über die Sende-und/oder Empfangseinrichtung stattfindet. Die Daten zwischen der Fertigungsstraße und dem Datenaustauschetikett werden häufig durch Hochtrequenzsignale übertragen. Wenn das Werkstück aus einem leitenden Material, insbesondere Metall, besteht, wird der Datenaustausch mit der Sende/Empfangseinrichtung erschwert, wenn dieselbe nahe an der Metalloberfläche des Werkstückes liegt.

Es ist daher bereits bekannt geworden, das Datenaustauschetikett auf einem dielektrischen Sockel anzuordnen, so dass die Sende- und/oder Empfangseinrichtung des Datenaustauschetiketts sich in einem ausreichenden Abstand zu der Metalloberfläche des Werkstückes befindet.

Diese bekannte Lösung hat sich jedoch nicht als zufriedenstellend erwiesen, da die Verwendung der dielektrischen Sockel die Vorratshaltung der Datenaustauschetiketten. die überlicherweise auf einer Vorratsrolle bereit gehalten werden müssen, erheblich erschweren.

Aus US-A-5 838 253 ist ein RF-Identifikationsetikett bekannt. Bei diesem ist ein RF-Schaltkreis einschließlich eines ersten Batterieteiles auf einem Basisabschnitt eines länglichen Streifens angeordnet. Auf einem umfaltbaren Abschnitt des länglichen Streifens ist ein zweites Batterieteil angeordnet. Der Streifen wird beispielsweise um den Handgriff eines Koffers geschlungen, wonach der umfaltbare Abschnitt auf den Basisabschnitt gefaltet und mit diesem verklebt wird. Dadurch gelangt das zweite Batterieteil auf das erste Batterieteil, so daß eine wirksame Batterie gebildet wird, durch die der RF-Schaltkreis aktiviert wird.

Aus US-A-5 779 839 ist ein Verfahren zur Herstellung eines Identifikationsetiketts bekannt. Bei diesem bekannten Etikett ist ein Schaltkreis auf einem Basisabschnitt eines Trägerstreifens angeordnet. Durch Umfalten eines umfaltbaren Abschnitts gelangt ein elektrischer Kontaktstreifen auf den Schaltkreis und setzt diesen in Betrieb.

Der Erfindung liegt daher die Aufgabe zugrunde, ein Datenaustauschetikett der eingangs genannten Art zu schaffen, das dünn ist und in großen Stückzahlen auf einer Vorratsrolle bereit gehalten werden kann und das dennoch auch auf metallischen Oberflächen eine ausreichende Qualität der Datenübertragung mit Hochfrequenzsignalen ermöglicht.

Diese Aufgabe wird durch die Merkmale des Patentanspruchs 1 gelöst.

Nach einer vorteilhaften Ausführungsform der Erfindung wird der aufstellbare Abschnitt durch zwei Trennungslinien erzeugt, die durch eine Falzlinie verbunden sind. Die Trennungslinien, die von einem Rand des Etiketts ausgehen, können entweder durch herkömmliche Etikettenstanztechnik oder durch Schneiden mit einem Laserstrahl erzeugt werden. Die beiden Trennungslinien verlaufen etwa in die gleiche Richtung, so dass sie mit der Falzlinie zusammen näherungsweise ein Rechteck bilden, das den aufstellbaren Abschnitt definiert. Nach einer alternativen Ausführungsform kann der aufstellbare Abschnitt auch durch eine über den Außenrand des Etiketts vorstehenden Lasche gebildet werden, die vorzugsweise längs einer Falzlinie umklappbar ist.

Nach einer weiteren Ausführungsform ist es ebenfalls möglich, einen Teil der Grundschicht des Etiketts durch eine Falzlinie abzutrennen, um auf diese Weise den aufstellbaren Abschnitt zu bilden.

Nach einer besonders vorteilhaften Ausgestaltung der Erfindung ist vorgesehen, dass der aufstellbare Abschnitt der Grundschicht mit Vorspannungsmittel versehen ist, durch die er in eine Position senkrecht zur Ebene des restlichen Etiketts der Grundschicht gebracht wird.

Solche Vorspannungsmittel können beispielsweise durch Verwenden von Materialien mit elastischem Formgedächtnis erzeugt werden. Entscheidend ist dabei lediglich, dass der aufstellbare Abschnitt gewissermaßen von selbst (sobald er freigegeben ist) in die aufgestellte Position etwa senkrecht zur Ebene des restlichen Teils der Grundschicht federt.

Nach einer vorteilhaften Ausführungsform halten die Arretiermittel den aufstellbaren Abschnitt der Grundschicht in einer Position etwa senkrecht zur Ebene des restlichen Teils der Grundschicht.

Nach einer vorteilhaften Ausführungsform umfassen die Arretiermittel zwei in entgegengesetze Richtungen umfaltbare Randabschnitte des aufstellbaren Abschnitts, die nach ihrem Umfalten den aufgestellten Abschnitt gegen Umkippen in beide Richtungen abstützen.

Auch diese durch die Randabschnitte gebildeten Stützen können nach einer weiteren vorteilhaften Ausgestaltungsform der Erfindung mit Vorbespannungsmitteln versehen sein, so dass die Stützen gewissermaßen automatisch ausklappen, sobald der aufstellbare Abschnitt der Grundschicht aufgestellt ist.

Als besonders vorteilhaft hat sich des weiteren erwiesen, Befestigungsmittel zur lösbaren Befestigung des aufstellbaren Abschnitts der Grundschicht in der Ebene des restlichen Teils der Grundschicht vorzusehen. Diese Befestigungsmittel sorgen dafür, dass während der Vorratshaltung, während des Aufspendevorgangs des Etiketts auf ein Werkstück und während der Dauer bis der beschriebene Datenaustausch stattfindet, der aufstellbare Abschnitt in der gleichen Ebene wie die restliche Grundschicht des Etiketts liegt.

Erst nach dem Auslösen der Befestigungsmittel kann der aufstellbare Abschnitt in die aufgestellte Position, etwa durch externe Einwirkung oder durch Vorsehen eines Werkstoffes mit elastischer Vorspannung gebracht werden.

Als Befestigungsmittel kann dabei vorteilhafterweise ein ablösbarer Klebstoff an der Unterseite des aufstellbaren Abschnitts der Grundschicht vorgesehen sein, durch dessen Wirkung der aufstellbare Abschnitt in der Ebene der Grundschicht gehalten wird. Dabei hat es sich als besonders vorteilhaft erwiesen, einen nichtklebenden Randbereich vorzusehen, an dem der aufstellbare Abschnitt entweder manuell gegriffen oder von externen mechanischen Mitteln wie beispielsweise einer Rampe oder einem Pressluftstrahl angegriffen und abgehoben werden kann.

Nach einer alternativen Ausführungsform ist vorgesehen, dass die Befestigungsmittel Einrastmittel umfassen, mittels derer der aufstellbare Abschnitt der Grundschicht längs der Trennungslinien einrastbar ist.

In diesem Zusammenhang hat sich eine Ausführungsvariante als vorteilhaft herausgestellt, bei der die Trennungslinien mit einer Fase derart versehen sind, dass der aufstellbare Abschnitt unter hinterschnittenen Kanten der Grundschicht einrastbar ist und dort festgehalten wird.

Schließlich ist es auch möglich, einen über die Grundschicht verlaufenden Steg in Form einer Tasche vorzusehen, in die der aufstellbare Abschnitt der Grundschicht einsteckbar ist.

Die Erfindung betrifft auch ein Verfahren zum Anbringen des Datenaustauschetiketts mit einem aufstellbaren Abschnitt an einem Werkstück zum Zwecke des automatischen elektronischen Datenaustausches, bei dem das Etikett von einer Trägerbahn abgelöst und auf das Werkstück gepresst wird. Erfindungsgemäß ist vorgesehen, dass nach dem Anpressen des Etiketts der aufstellbare Abschnitt aufgestellt. wird, damit der Hochfrequenzdatenaustausch zwischen der Sende- und/oder Empfangseinrichtung des Datenaustauschetiketts und der Fertigungsstraße stattfinden kann.

Nach einer vorteilhaften Ausgestaltung des Verfahrens ist vorgesehen, dass der aufstellbare Abschnitt gegen eine Anlaufkante oder Anlauframpe geführt wird, durch die er aus seiner Befestigungsposition herausgehoben und umgefalzt wird.

Nach einer vorteilhaften Verfahrensvariante wird hierzu ein Pressluftstrahl verwendet.

Die umfaltbaren Randabschnitte, die zur Arretierung oder zur Abstützung des aufgestellten Abschnitts dienen, werden nach einer weiteren Ausgestaltung des Verfahrens mit automatischen Greiferzangen erfasst und in entgegengesetzten Richtungen gegen den aufstellbaren Abschnitt gefalzt, so dass der aufstellbare Abschnitt zusammen mit den Randabschnitten ein im Querschnitt etwa z-förmiges Gebilde ergibt, das für eine weitgehend aufrechte Haltung des aufstellbaren Abschnitts während dieser Phase der Bearbeitung sorgt.

In weiterer Ausgestaltung des erfindungsgemäßen Verfahrens ist vorgesehen, dass der aufstellbare Abschnitt nach dem Datenaustausch mit einer Walze oder Bürste zurück auf das Werkstück, also in die Ebene des restlichen Teils der Grundschicht, gedrückt und dort befestigt wird. Die Befestigung erfolgt - je nach Ausführungsvariante des Datenaustauschetiketts - entweder dadurch, dass die Verbindung zwischen dem aufstellbaren Abschnitt und der Oberfläche des Werkstückes über den ablösbaren Haftkleber wieder hergestellt wird oder dass der aufstellbare Abschnitt wieder in die Hinterschneidungen in der Grundschicht eingerastet wird. Hierzu kann vorteilhafterweise der Anpressdruck der Bürste oder Walze ausgenützt werden.

Die Erfindung wird im folgenden anhand der in den Figuren schematisch dargestellten Ausführungsbeispiele näher erläutert. Es zeigt:
- Figur 1:: eine erste Ausführungsform eines Etiketts gemäß der Erfindung
- Figur 2:: das Etikett aus Figur 1, bei dem sich der aufstellbare Abschnitt in der aufgestellten Position befindet
- Figur 3:: eine Frontansicht des Etiketts wie in Figur 1 gezeigt, jedoch mit einer alternativen Befestigungseinrichtung
- Figur 4:: eine zweite Ausführungsform des Etiketts gemäß der Erfindung
- Figur 5:: das Etikett gemäß Figur 4 mit aufgestelltem Abschnitt
- Figur 6:: eine dritte Ausführungsform des Etiketts gemäß der Erfindung in der Draufsicht und
- Figur 7:: das Etikett aus Figur 6 mit aufgestelltem Abschnitt

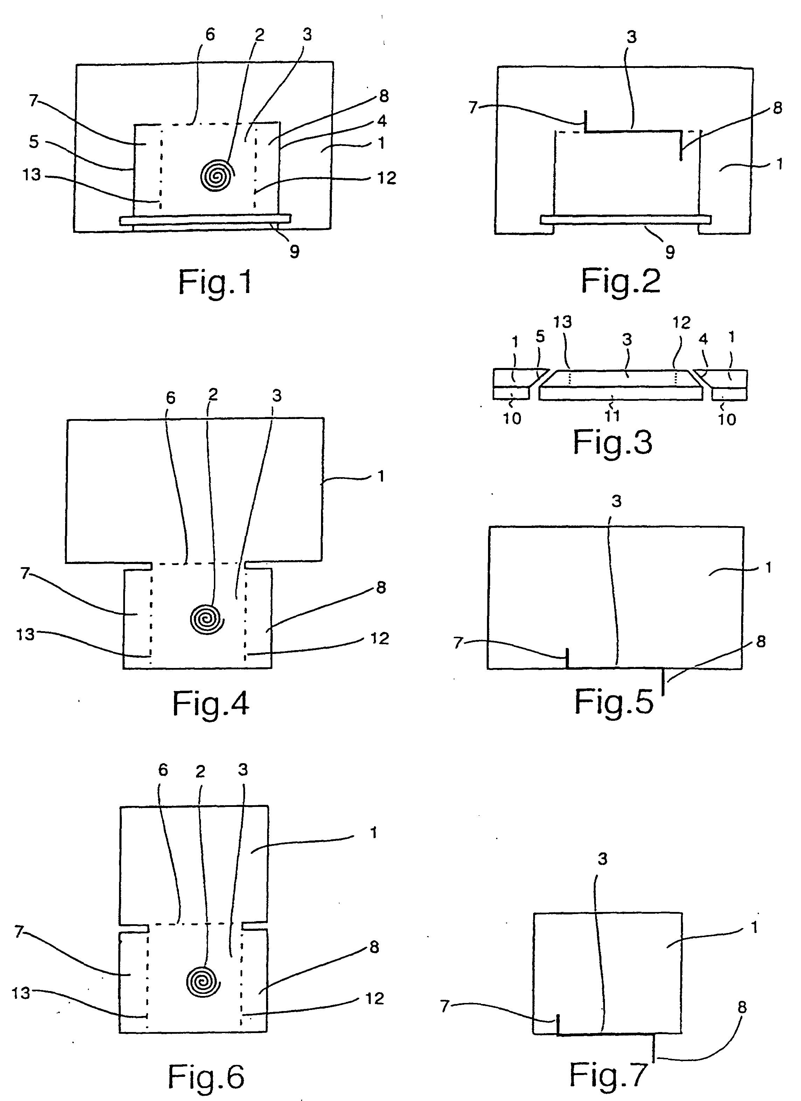

Figur 1 zeigt ein im Grobumriss etwa rechteckiges Etikett mit einer Grundschicht 1. Die Grundschicht 1 ist an ihrer in der Darstellung der Figur 1 untenliegenden Seite weitgehend mit Klebstoff beschichtet. Durch zwei Stanzlinien 4 und 5, die etwa parallel verlaufen und von einem Rand des Etiketts ausgehen sowie durch eine die beiden Stanzlinien verbindende Falzlinie 6 wird ein aufstellbarer Abschnitt 3 der Grundschicht 1 gebildet. Auf diesem aufstellbaren Abschnitt 3 ist eine Sende- und/oder Empfangseinrichtung 2 angeordnet, die in der Zeichnung durch eine Spirale symbolisiert ist. Während die Grundschicht 1 größtenteils selbstklebend ausgebildet ist, ist der aufstellbare Abschnitt 3 nichtklebend. Dies kann dadurch erreicht sein, dass Haftklebstoff auf die Grundschicht 1 mit Ausnahme des Bereichs des aufstellbaren Abschnitts 3 selektiv aufgetragen worden ist. Es ist jedoch auch möglich von einer vollflächig mit Haftklebstoff beschichteten Grundschicht 1 auszugehen, die im Bereich des aufstellbaren Abschnitts 3 mit einem die Wirkung des Haftklebstoffs aufhebenden Mittel, wie beispielsweise einem Lack, bedruckt ist.

Auf dem aufstellbaren Abschnitt 3 sind parallel zu den Trennungslinien 4 und 5 zwei Falzlinien 12 und 13 vorgesehen, durch die der aufstellbare Abschnitt 3 mit umfaltbaren Randbereichen 7 und 8 ausgestattet wird. Um den aufstellbaren Abschnitt 3 in der in Figur 1 gezeigten Position zu halten, ist eine Tasche 9 vorgesehen, die aus einem den umfaltbaren Abschnitt 3 und ein Teil des restlichen Teils der Grundschicht 1 überdeckenden Steg besteht.

Etiketten der in Figur 1 gezeigten Art sind auf einem zu einer Rolle gewickeltem Trägerband (nicht dargestellt) angeordnet, das an seiner Oberfläche mit einer Klebstoff abweisenden Schicht belegt ist, so dass die gezeigten Etiketten von diesem abgelöst werden können, wenn das Trägerband um eine Spendekante gezogen wird.

Auf diese Weise wird das Etikett auf ein Werkstück aufgespendet. Um das Etikett für den elektronischen Datenaustausch mittels Hochfrequenzwellen herzurichten, wird der aufstellbare Abschnitt 3 aus der Tasche 9 gezogen und um die Falzlinie 6 um etwa 90 ° gedreht. Danach werden die umfaltbaren Randabschnitte 7 und 8 in entgegengesetzte Richtungen gefaltet, so dass der aufstellbare Abschnitt 3 zusammen mit den Randabschnitten 7 und 8 eine z-förmige Gestalt annimmt, wie dies in Figur 2 deutlich zu erkennen ist. Die Randabschnitte 7 und 8 dienen dabei als Stützen oder Arretiermittel, durch die der umfaltbare Abschnitt 3 in seiner aufgerichteten Position gehalten wird, bis der Datenaustausch abgeschlossen ist. Danach kann der umfaltbare Abschnitt 3 wieder in die in Figur 1 gezeigte Position zurückgebracht werden, wobei er mit seinem freien Ende in die Tasche 9 gesteckt wird.

Figur 3 zeigt ein Etikett ähnlich dem in Figur 1 in der Vorderansicht gesehen. Figur 3 ist nicht maßstabsgetreu. Insbesondere sind in Figur 3 die Schichtdicken zur Verdeutlichung stark vergrößert. Abweichend von dem in Figur 1 gezeigten Etikett ist bei der Ausführungsvariante gemäß Figur 3 der aufstellbare Abschnitt an seiner Unterseite mit einem ablösbaren Haftklebstoff 11 versehen, der als Befestigungsmittel wirkt, durch das der aufstellbare Abschnitt 3 in der in Figur 1 und in Figur 3 gezeigten Position gehalten wird. Zusätzlich ist als Befestigungsmittel eine Hinterschneidung bei den Trennungslinien 4 und 5 vorgesehen, durch die der aufstellbare Abschnitt 3 gewissermaßen unter die Ränder der übrigen Teile der Grundschicht 1 eingerastet werden kann. Eine solche gefaste Trennungslinie kann durch Schneiden der Grundschicht 1 mit einem Laserstrahl erzeugt werden. Selbstverständlich ist es auch möglich, nur eines der beiden geschilderten Befestigungsmittel (ablösbarer Klebstoff 11 oder hinterschnittene Trennungslinien 4 und 5) einzusetzen.

Figur 4 zeigt eine zweite Ausführungsform des Etiketts gemäß der Erfindung. Diese zweite Ausführungsform unterscheidet sich von der in Figur 1 gezeigten Ausführungsform dadurch, dass der aufstellbare Abschnitt 3 gewissermaßen außerhalb des Hauptetiketts angeordnet ist. Der aufstellbare Abschnitt 3 umfasst widerum die Sende- und/oder Empangseinrichtung 2 sowie zwei über Falzlinien 12 und 13 umfaltbare Randbereiche 7 und 8. Er ist gewissermaßen über die Falzlinien 6 an dem übrigen Teil der Grundschicht 1 angelenkt. Der aufstellbare Abschnitt 3 ist an seiner Unterseite (in der Figur nicht zu erkennen) mit einem ablösbaren Klebstoff beschichtet, durch den er sowohl auf der Vorratsträgerbahn als auch während des Aufspendens auf ein Werkstück in der gleichen Ebene wie der übrige Teil der Grundschicht 1 gehalten wird. Durch Abheben des aufstellbaren Abschnitts 3 von dem Werkstück kann dieser in eine Position etwa senkrecht zum übrigen Teil der Grundschicht 1 gebracht werden. Danach können die umfaltbaren Randabschnitte 7 und 8 in entgegengesetzte Richtungen ebenfalls um etwa 90 ° umgefaltet werden, so dass der aufstellbare Abschnitt im Querschnitt wiederum z-förmig wird. Die Situation mit dem aufgestellten z-förmig gefalteten Abschnitt 3 ist in Figur 5 in der Draufsicht gezeigt.

Figur 6 zeigt eine dritte Ausführungsform der Erfindung, bei der ein Abschnitt des Etiketts durch eine Falzlinie 6 abgetrennt ist, so dass ein aufstellbarer Abschnitt 3 entsteht, der sinngemäß wie anhand des Ausführungsbeispiels der Figur 4 beschrieben aufgestellt und arretiert werden kann. Die aufgestellte Situation ist in der Draufsicht in Figur 7 gezeigt.

## Patentansprüche

1. Datenaustauschetikett mit einer mindestens teilweise mit Klebstoff (10) beschichteten Grundschicht (1) und einer mit der Grundschicht (1) verbundenen Sende- und/oder Empfangseinrichtung (2), die zumindest teilweise auf einem drehbaren Abschnitt (3) angeordnet ist, **dadurch gekennzeichnet, dass** der Abschnitt (3) aufstellbar ist und dass Arretiermittel (7, 8) vorgesehen sind, durch die der aufstellbare Abschnitt (3) der Grundschicht (1) in seiner aufgestellten Position gehalten wird.

2. Datenaustauschetikett nach Anspruch 1, **dadurch gekennzeichnet, dass** der aufstellbare Abschnitt (3) durch zwei Trennungslinien (4, 5) und eine die beiden Trennungslinien (4, 5) verbindende Falzlinie (6) begrenzt wird.

3. Datenaustauschetikett nach Anspruch 1, **dadurch gekennzeichnet, dass** der aufstellbare Abschnitt (3) aus einer vorstehenden Lasche besteht.

4. Datenaustauschetikett nach Anspruch 1, **dadurch gekennzeichnet, dass** der aufstellbare Abschnitt (3) aus einem durch eine Falzlinie (6) abgetrennten Teil der Grundschicht (1) begrenzt wird.

5. Datenaustauschetikett nach einem der vorhergehenden Ansprüche, **dadurch gekennzeichnet, dass** der aufstellbare Abschnitt (3) der Grundschicht (1) Vorspannungsmittel aufweist, durch die er in eine Position senkrecht zur Ebene des restlichen Teils der Grundschicht (1) gebracht wird.

6. Datenaustauschetikett nach Anspruch 5, **dadurch gekennzeichnet, dass** die Vorspannungsmittel an der Falzlinie (6) angeordnet sind.

7. Datenaustauschetikett nach einem der vorhergehenden Ansprüche, **dadurch gekennzeichnet, dass** die Arretiermittel (7, 8) den aufstellbaren Abschnitt (3) der Grundschicht (1) in einer Position senkrecht zur Ebene des restlichen Teils der Grundschicht (1) halten.

8. Datenaustauschetikett nach Anspruch 7, **dadurch gekennzeichnet, dass** die Arretiermittel (7, 8) zwei in entgegengesetzte Richtungen umfaltbare Randabschnitte (7, 8) des aufstellbaren Abschnitts (3) der Grundschicht (1) aufweisen.

9. Datenaustauschetikett nach Anspruch 8, **dadurch gekennzeichnet, dass** Vorspannungsmittel vorgesehen sind, die ein Umfalten der Randabschnitte (7, 8) bewirken, sobald der aufstellbare Abschnitt (3) der Grundschicht (1) aus der Ebene des restlichen Teils der Grundschicht (1) herausgeklappt ist.

10. Datenaustauschetikett nach einem der vorhergehenden Ansprüche, **dadurch gekennzeichnet, dass** Befestigungsmittel zur lösbaren Befestigung des aufstellbaren Abschnitts (3) der Grundschicht (1) in der Ebene des restlichen Teils der Grundschicht (1) vorgesehen sind.

11. Datenaustauschetikett nach Anspruch 10, **dadurch gekennzeichnet, dass** die Befestigungsmittel einen ablösbaren Klebstoff (11) an der Unterseite des aufstellbaren Abschnitts (3) der Grundschicht (1) umfassen.

12. Datenaustauschetikett nach Anspruch 11, **dadurch gekennzeichnet, dass** ein Randbereich des aufstellbaren Abschnitts (3) der Grundschicht (1) zur Bildung einer Anfasslasche nichtklebend ist.

13. Datenaustauschetikett nach Anspruch 10 und Anspruch 2, **dadurch gekennzeichnet, dass** die Befestigungsmittel Einrastmittel umfassen, mittels derer der aufstellbare Abschnitt (3) der Grundschicht (1) längs der Trennungslinien (4, 5) einrastbar ist.

14. Datenaustauschetikett nach Anspruch 13, **dadurch gekennzeichnet, dass** die Trennungslinien (4, 5) mit einer Fase versehene, Hinterschneidungen bildende Kanten aufweisen, derart, dass der aufstellbare Abschnitt (3) der Grundschicht (1) in den Hinterschneidungen einrastbar ist.

15. Datenaustauschetikett nach Anspruch 10 , **dadurch gekennzeichnet, dass** die Grundschicht (1) eine Tasche (9) aufweist, in die der aufstellbare Abschnitt (3) der Grundschicht (1) einsteckbar ist.

16. Verfahren zum Anbringen eines Datenaustauschetiketts nach einem der vorhergehenden Ansprüche mit einem aufstellbaren Abschnitt an einem Werkstück zum Zwecke des automatischen elektronischen Datenaustausches, bei dem das Etikett von einer Trägerbahn abgelöst und auf das Werkstück gepresst wird, **dadurch gekennzeichnet, dass** nach dem Anpressen des Etiketts der aufstellbare Abschnitt (3) aufgestellt wird.

17. Verfahren nach Anspruch 16, **dadurch gekennzeichnet, dass** der austellbare Abschnitt (3) gegen eine Anlaufkante geführt wird, durch die er von dem Werkstück abgehoben und umgefalzt wird.

18. Verfahren nach Anspruch 16, **dadurch gekennzeichnet, dass** der austellbare Abschnitt (3) mit einem Pressluftstrahl angeblasen und aufgestellt wird.

19. Verfahren nach Anspruch 16, **dadurch gekennzeichnet, dass** der aufstellbare Abschnitt (3) mit einem Saugkopf angehoben und aufgestellt wird.

20. Verfahren nach einem der Ansprüche 16 bis 19, **dadurch gekennzeichnet, dass** nach dem Aufstellen des aufstellbaren Abschnitts (3) dessen umfaltbare Randabschnitte (7, 8) mit automatischen Greiferzangen erfasst und umgefaltet werden.

21. Verfahren nach einem der Ansprüche 16 bis 20, **dadurch gekennzeichnet, dass** der aufstellbare Abschnitt (3) nach dem Datenaustausch mit einer Walze oder Bürste zurück auf das Werkstück gedrückt und dort befestigt wird.

## Claims

1. A data exchange label comprising a base layer (1) that is at least partially coated with adhesive (10) and a sending and/or receiving device (2) which is connected to the base layer (1) and is situated at least partially on a rotatable section (3),
**characterized in that** the section (3) can be uprighted, and locking means (7, 8) are provided by which the uprightable section (3) of the base layer (1) is held in its upright position.

2. The data exchange label according to Claim 1,
**characterized in that** the uprightable section (3) is bordered by two dividing lines (4, 5) and a fold line (6) connecting the two dividing lines (4, 5).

3. The data exchange label according to Claim 1,
**characterized in that** the uprightable section (3) consists of a protruding strap.

4. The data exchange label according to Claim 1,
**characterized in that** the uprightable section (3) is bordered by of a part of the base layer (1) which is separated by a fold line (6).

5. The data exchange label according to any one of the preceding claims,
**characterized in that** the uprightable section (3) of the base layer (1) has prestressing elements by means of which it is brought into a position perpendicular to the plane of the remaining portion of the base layer (1).

6. The data exchange label according to Claim 5,
**characterized in that** the prestressing means are arranged on the fold line (6).

7. The data exchange label according to any one of the preceding claims,
**characterized in that** the locking means (7, 8) hold the uprightable section (3) of the base layer (1) in a position perpendicular to the plane of the remaining part of the base layer (1).

8. The data exchange label according to Claim 7,
**characterized in that** the locking means (7, 8) have two edge sections (7, 8) of the uprightable section (3) of the base layer (1) which can be folded over in opposite directions.

9. The data exchange label according to Claim 8,
**characterized in that** prestressing means are provided, causing the edge sections (7, 8) to be folded over as soon as the uprightable section (3) of the base layer (1) is folded up out of the plane of the remaining part of the base layer (1).

10. The data exchange label according to any one of the preceding claims,
**characterized in that** fastening means are provided for detachable fastening of the uprightable section (3) of the base layer (1) in the plane of the remaining part of the base layer (1).

11. The data exchange label according to Claim 10,
**characterized in that** the fastening means include a detachable adhesive (11) on the bottom side of the uprightable section (3) of the base layer (1).

12. The data exchange label according to Claim 11,
**characterized in that** an edge are of the uprightable section (3) of the base layer (1) is nonadhesive to form a grip tab.

13. The data exchange label according to Claim 10 and Claim 2,
**characterized in that** the fastening means include engagement means by means of which the uprightable section (3) of the base layer (1) can be engaged along the dividing lines (4, 5).

14. The data exchange label according to Claim 13,
**characterized in that** the dividing lines (4, 5) have edges which are provided with a chamfer and form undercuts such that the uprightable section (3) of the base layer (1) is engageable in the undercuts.

15. The data exchange label according to Claim 10,
**characterized in that** the base layer (1) has a pocket (9) into which the uprightable section (3) of the base layer (1) can be inserted.

16. A method of applying a data exchange label according to any one of the preceding claims having an uprightable section to a workpiece for the purpose of automatic electronic data exchange, whereby the label is released from a carrier strip and is pressed onto the workpiece,
**characterized in that** after pressing the label onto the workpiece, the uprightable section (3) is uprighted.

17. The method according to Claim 16,
**characterized in that** the uprightable section (3) is guided against a starting edge by which it is raised up from the workpiece and folded over.

18. The method according to Claim 16,
**characterized in that** the uprightable section (3) is blown with a compressed air jet and is uprighted.

19. The method according to Claim 16,
**characterized in that** the uprightable section (3) is raised with a suction head and thereby uprighted.

20. The method according to any one of Claims 16 through 19,
**characterized in that** after uprighting the uprightable section (3) its edge sections (7, 8) that can be folded over are gripped with automatic gripper tongues and folded over.

21. The method according to any one of Claims 16 through 20,
**characterized in that** the uprightable section (3) is pressed back against the workpiece and attached there with a roller or brush after the data exchange.

## Revendications

1. Etiquette d'échange de données comportant une couche de fond (1) enrobée au moins partiellement de colle (10) et un dispositif récepteur et/ou émetteur (2) relié à la couche de fond (1) qui est disposé du moins partiellement sur une section pouvant tourner (3), **caractérisée en ce que** la section (3) est relevable et qu' il est prévu des moyens d' arrêt (7, 8) qui permettent de maintenir la section relevable (3) de la couche de base (1) dans sa position relevée.

2. Etiquette d'échange de données selon la revendication 1, **caractérisée en ce que** la section relevable (3) est délimitée par deux lignes de séparation (4, 5) et une ligne de pliage (6) reliant les deux lignes de séparation (4, 5).

3. Etiquette d'échange de données selon la revendication 1, **caractérisée en ce que** la section relevable (3) est composée d'une languette proéminente.

4. Etiquette d'échange de données selon la revendication 1, **caractérisée en ce que** la section relevable (3) est délimitée par une partie de la couche de base (1) séparée par une ligne de pliage (6).

5. Etiquette d'échange de données selon l'une quelconque des revendications précédentes, **caractérisée en ce que** la section relevable (3) de la couche de base (1) présente des moyens de précontrainte qui permettent de l'amener dans une position perpendiculaire au plan de la partie résiduelle de la couche de base (1).

6. Etiquette d'échange de données selon la revendication 5, **caractérisée en ce que** les moyens de précontrainte sont disposés sur la ligne de pliage (6).

7. Etiquette d'échange de données selon l'une quelconque des revendications précédentes, **caractérisée en ce que** les moyens d'arrêt (7, 8) maintiennent la section relevable (3) de la couche de base (1) dans une position perpendiculaire au plan de la partie résiduelle de la couche de base (1).

8. Etiquette d'échange de données selon la revendication 7, **caractérisée en ce que** les moyens d'arrêt (7, 8) présentent deux sections périphériques (7, 8) relpliables dans des sens opposés de la section relevable (3) de la couche de base (1).

9. Etiquette d'échange de données selon la revendication 8, **caractérisée en ce qu'**il est prévu des moyens de précontrainte qui provoquent un repliement des sections périphériques (7, 8) dès que la section relevable (3) de la couche de base (1) est rabattue hors du plan de la partie résiduelle de la couche de base (1).

10. Etiquette d'échange de données selon l'une quelconque des revendications précédentes, **caractérisée en ce qu'**il est prévu des moyens de fixation pour la fixation détachable de la section relevable (3) de la couche de base (1) dans le plan de la partie résiduelle de la couche de base (1).

11. Etiquette d'échange de données selon la revendication 10, **caractérisée en ce que** les moyens de fixation comprennent une colle détachable (11) sur la face inférieure de la section relevable (3) de la couche de base (1).

12. Etiquette d'échange de données selon la revendication 11, **caractérisée en ce qu'**une zone périphérique de la section relevable (3) de la couche de base (1) est non collante afin de former une languette de saisie.

13. Etiquette d'échange de données selon la revendication 10 et la revendication 2, **caractérisée en ce que** les moyens de fixation comprennent des moyens d'enclenchement au moyen desquels la section relevable (3) de la couche de base (1) peut s'enclencher le long des lignes de séparation (4, 5).

14. Etiquette d'échange de données selon la revendication 13, **caractérisée en ce que** les lignes de séparation (4, 5) présentent des arêtes formant des découpes arrière et pourvues d'un chanfrein de manière à ce que la section relevable (3) de la couche de base (1) puisse s'enclencher dans les découpes arrière.

15. Etiquette d'échange de données selon la revendication 10, **caractérisée en ce que** la couche de base (1) présente une poche (9) dans laquelle peut s'insérer la section relevable (3) de la couche de base (1).

16. Procédé de pose d'une étiquette d'échange de données selon l'une quelconque des revendications précédentes, comportant une section relevable, sur une pièce usinée dans un but d'échange électronique automatique de données, dans lequel on détache l'étiquette d'une bande support et on l'appuie sur la pièce usinée, **caractérisé en ce qu'**on relève la section relevable (3) après avoir appuyé sur l'étiquette.

17. Procédé selon la revendication 16, **caractérisé en ce qu'**on guide la section relevable (3) contre une arête de départ qui permet de la soulever de la pièce usinée et de la replier.

18. Procédé selon la revendication 16, **caractérisé en ce qu'**on souffle et qu'on pose la section relevable (3) à l'aide d'un jet d'air comprimé.

19. Procédé selon la revendication 16, **caractérisé en ce qu'**on souffle et qu'on pose la section relevable (3) à l'aide d'une tête d'aspiration.

20. Procédé selon l'une quelconque des revendications 16 à 19, **caractérisé en ce qu'**après avoir posé la section relevable (3), on saisit et on replie ses sections périphériques repliables (7, 8) à l'aide de pinces automatiques.

21. Procédé selon l'une quelconque des revendications 16 à 20, **caractérisé en ce qu'**après l'échange de données, on rappuie la section relevable (3) à l'aide d'un rouleau ou d'une brosse sur la pièce usinée et qu'on la fixe dessus.
